# EUROPEAN PATENT APPLICATION

(11) **EP 0 897 240 A2**
(43) Date of publication of application: **17.02.1999**
(21) Application number: 97308284.5
(22) Date of filing: 17.10.1997
(51) Int. Cl.: H04N 5/33

(54) **Constant-temperature drive methods for infrared-image-pickup devices**

(30) Priority: 13.08.1997 JP 218714/97
(71) Applicant: NIKON CORPORATION, Tokyo 100 (JP)
(72) Inventor: Yamanaka, Hideki, c/o Nikon Corporation, 3-chome, Chiyoda-ku, Tokyo 100 (JP)
(74) Representative: Meddle, Alan Leonard

(57) **Abstract**

Method and apparatus are disclosed for driving an infrared-image-pickup (IIP) device such that device temperature is maintained substantially constant to reduce or eliminate noise when switching shutter speeds or when switching between a non-electronic-shutter mode and an electronic-shutter mode. The IIP device includes photodetectors that store charge when exposed to infrared light and includes transfer units, such as charged coupled devices. The number of pseudo or dummy pulses that are applied to the transfer units in a non-electronic-shutter mode is substantially equal to the number of pulses applied to the transfer units in an electronic-shutter mode. Having the same number of pulses allows the temperature of the IIP device to remain substantially unchanged when switching between non-electronic-shutter and electronic-shutter modes. Similarly, the number of pulses is maintained substantially constant at all shutter speeds so that switching between shutter speeds does not result in temperature changes and noise.

## Description

### Field of the Invention

This invention concerns infrared-image-pickup (IIP) devices and associated drive methods, and, more particularly, to such a drive methods that maintain an IIP device at a substantially constant temperature to reduce or eliminate noise in an electrical signal produced by the IIP device.

### Background of the Invention

Infrared-image-pickup (IIP) devices are used to observe heat phenomena and are also used in night-monitoring cameras. IIP devices comprise photodetectors that store an electrical charge when exposed to infrared light. The photodetectors are thereby used to capture an image, rather than using sensitized films as in more traditional photography devices. IIP devices can operate in an electronic-shutter mode or a non-electronic-shutter mode. In the electronic-shutter mode, the photodetectors are discharged to clear any stored image and then recharged for a predetermined period of time (i.e., an exposure time) before reading the image. An electronic-shutter mode is analogous to a shutter mechanism in traditional photography devices wherein a shutter opens and closes an aperture in a lens to expose film or the like for a defined length of time. In the non-electronic-shutter mode, the photodetectors accumulate charge based on the length of time they are exposed to the infrared light; discharging of the photodetectors is not needed.

As further described below, switching between the non-electronic- and electronic-shutter modes can undesirably increase the temperature of the IIP device, causing noise in the output. Similarly, changing the electronic-shutter speed in the electronic-shutter mode can cause temperature changes, resulting in noise in the output of the IIP device.

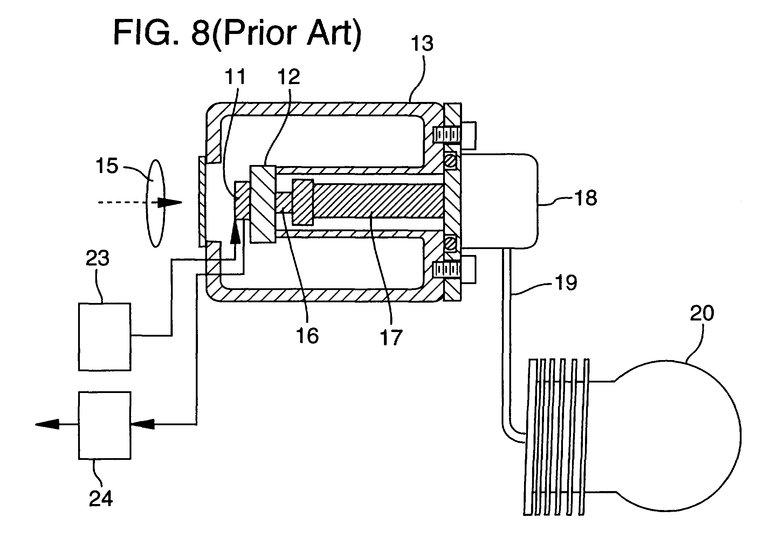

FIG. 8 shows a conventional cooling mechanism 10 for housing a prior-art IIP device 11. The IIP device 11 is mounted on a surface of a cold stage 12 having high thermoconductivity. Both the IIP device 11 and the cold stage 12 are mounted inside a vacuum container 13 (e.g., a Dewar container) maintained substantially under vacuum. The cooling mechanism 10 also includes an infrared-transmission window 14 for allowing infrared light from an infrared-optical system 15 to form an optical image on the IIP device 11. One end of a cold finger 17 having high thermoconductivity is connected to the back surface of the cold stage 12 through a thermal interface 16 that reduces distortion due to temperature changes. An expansion unit 18 for expanding a coolant is connected to an opposed end of the cold finger 17. A compressor 20 for compressing the coolant is connected to the expansion unit 18 through a coupler 19. In operation, the coolant circulates between the expansion unit 18 and the compressor 20 via the coupler 19 to maintain the expansion unit 18 at a low temperature (such as approximately 80K). A drive circuit 23 and a signal-processing circuit 24 are electrically coupled to a connection terminal on the IIP device 11. The drive circuit 23 controls the timing of the IIP device to output image data to the signal-processing circuit 24.

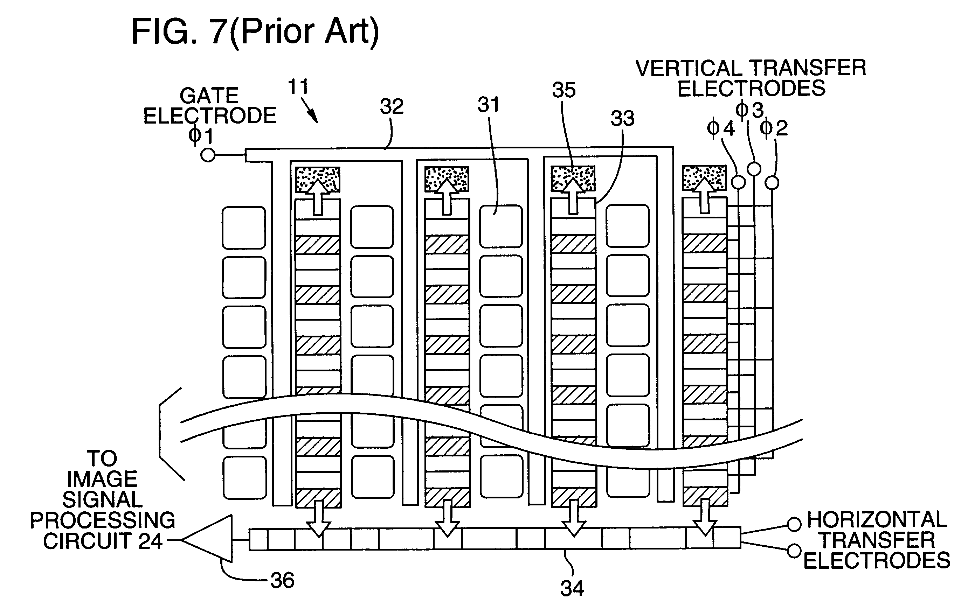

FIG. 7 shows the IIP device 11 in more detail. The IIP device 11 includes photodetectors 31, transfer gates 32, vertical charge-coupled devices (CCDs) 33, a horizontal CCD 34, drain units 35 and a charge-detection unit 36. The photodetectors 31 are formed from a PtSi Schottky junction or the like and are arranged in a two-dimensional array on a substrate of the IIP device 11. The photodetectors 31 convert an infrared light beam (not shown) incident on a surface of the substrate into an electrical signal. The vertical CCDs 33 are arranged in an array with columns of the vertical CCDs adjacent columns of the corresponding photodetectors 31. The transfer gates 32 are situated between the columns of the vertical CCDs 33 and the photodetectors 31. When activated, the transfer gates 32 allow charge to pass from the photodetectors 11 to the corresponding vertical CCDs 33. The horizontal CCD 34 is situated on one end of the vertical CCDs and gathers charges from the vertical CCDs 33. The horizontal CCD 34 outputs such charges to the charge-detection unit 36 located at an output terminal of the horizontal CCD 34. The charge-detection unit 36 converts the charges on the horizontal CCD to a voltage signal that is then passed to the image-processing circuit 24 for processing. The drain units 35 are situated on an opposed end of the vertical CCDs and are used to discharge the vertical CCDs in the non-electronic-shutter mode, as is further described below.

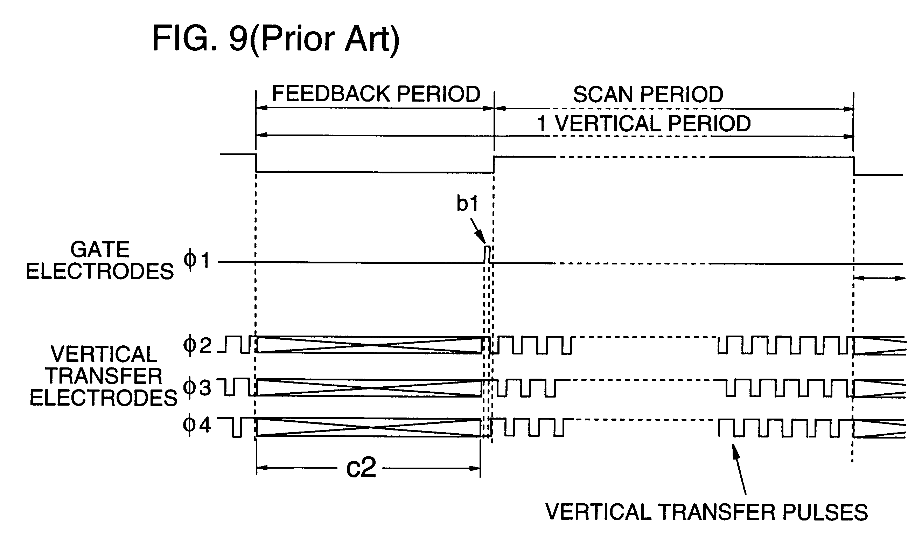

The operation of the IIP device 11 is described in relation to FIGS. 7, 8 and 9. FIG. 9 shows a drive cycle of the IIP device 11 that includes two periods: a vertical-feedback period and a vertical-scan period. The vertical-feedback period is used for discharging the photodetectors 31 (used in an electronic-shutter mode) and the vertical-scan period is used to read the image captured by the photodetectors.

Prior to the start of the vertical-scan period, the drive circuit 23 (FIG. 8) applies a gate pulse b1 (FIG. 9) to a gate electrode φ1 (FIG. 7) . The gate pulse b1 activates the transfer gates 32 so that signal charges stored in the photodetectors 31 are transferred to potential wells (not shown) in the vertical CCDs 33.

The vertical-scan period starts shortly after the gate pulse b1. During this period, the drive circuit 23 applies vertical-discharge pulses in three phases to the vertical-transfer electrodes φ2, φ3 and φ4 (see FIG. 9). The vertical-discharge pulses cause signal charges on the vertical CCDs 33 to be sequentially transferred to the horizontal CCD 34. The horizontal CCD 34 then sequentially outputs the charges to the charge-detection unit 36. The charge-detection unit 36 converts the signal charges into a voltage signal and outputs the voltage signal to the signal-processing circuit 24 (FIG. 8).

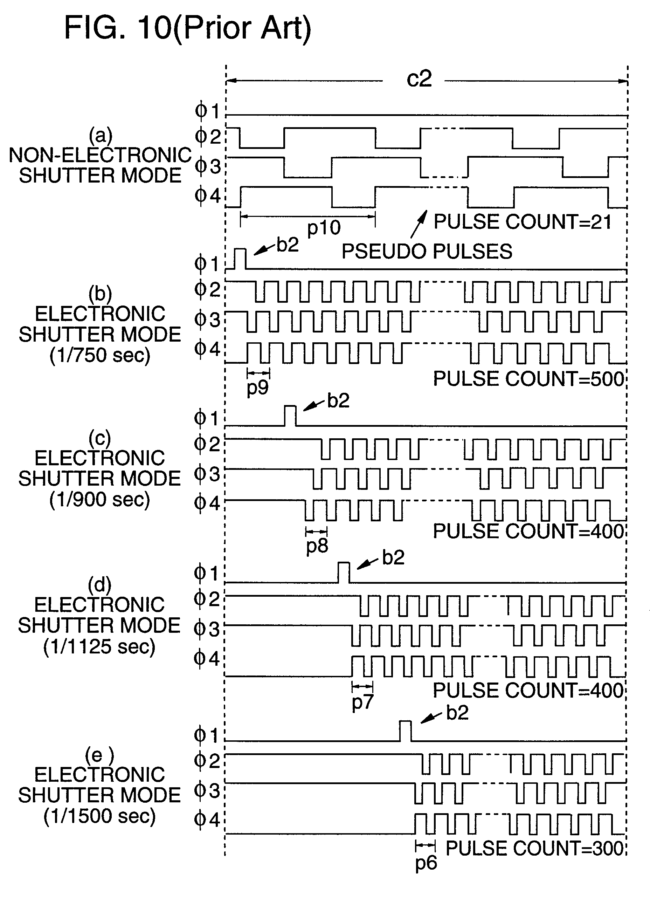

The vertical-feedback period is shown in FIG. 9 as a period C2 and is the period preceding the gate pulse b1. This period is shown in FIGS. 10(a) through 10(e) in greater detail. FIG. 10(a) shows the period C2 in a non-electronic-shutter mode. Conventionally, in a non-electronic-shutter mode, vertical-discharge pulses are continuously applied to the vertical-transfer electrodes φ2 to φ4, but the number of pulses is low in comparison to the number of pulses used in the electronic-shutter mode. For example, the number of pulses shown in the period C2 is approximately twenty one.

FIGS. 10(b) through 10(e) show the IIP device 11 in an electronic-shutter mode at varying shutter speeds. Normally, the number of pulses is much larger (e.g., 500 pulses for a shutter speed of 1/750 sec.) than in the non-electronic-shutter mode of FIG. 10(a). For each shutter speed, the drive circuit 23 applies a gate pulse b2 a length of time earlier than the gate pulse b1. This length of time is equal to the electronic exposure time. The gate pulse b2 causes unnecessary charges stored in the photodetectors 31 to be transferred to the side-potential wells of the vertical CCDs 33 via the transfer gates 32. Following this transferring operation, the drive circuit 23 applies high-speed vertical-discharge pulses to the vertical-transfer electrodes φ2 to φ4. The unnecessary charges on the vertical CCDs 33 are transferred in the direction of the drain units 35 at high speed. The drain units 35 sequentially dispose of the transferred unnecessary charges. All of the unnecessary charges can be disposed of by setting the number of the vertical-discharge pulses at not less than the number of the side-potential wells in the vertical CCDs 33. For example, if the shutter speed is 1/750 sec., the number of vertical-discharge pulses is set at 500 as shown in FIG. 10(b). At a shutter speed of 1/900 sec., the number of vertical-discharge pulses is set at 400 as shown in FIG. 10(c). At a shutter speed of 1/1125 sec., the number of vertical-discharge pulses is set at 400 as shown in FIG. 10(d). At a shutter speed of 1/1500 sec., the number of vertical-discharge pulses is set at 300 as shown in FIG. 10(e).

Thus, an electronic shutter is realized by first discharging the photodetectors 31 and then recharging them for a time period equal to the time from the gate pulse b2 to the gate pulse b1 (the electronic exposure time).

According to the above-described prior art, if the non-electronic-shutter mode is switched to the electronic-shutter mode, the number of pulses in the period C2 increases dramatically. For example, in FIG. 10 the number of pulses increases from 21 in a non-electronic-shutter mode to 500 in an electronic-shutter mode having a shutter speed of 1/750 sec. This large increase in pulses causes a temperature increase in the IIP device 11. The vacuum container 13 that houses the IIP device 11 can restore the original temperature, but to do so can take anywhere from a few seconds to a few minutes. The temporary increase in temperature detrimentally affects the photodetectors 31 which results in noise. The resultant noise disadvantageously enters an outputted image signal produced by the image signal-processing unit 24.

Noise can also result from a change in shutter speed in the electronic-shutter mode. A change in shutter speed causes the number of pulses in the period C2 to increase or decrease. This changing in the number of pulses causes a temporary temperature change in the pickup device 11. Again, the result is noise disadvantageously entering an outputted image signal.

### Summary of the Invention

In view of the foregoing shortcomings of the prior art, an object of the invention is to provide an infrared-image-pickup (IIP) device capable of decreasing noise generated when a non-electronic-shutter mode is switched to an electronic-shutter mode. A further object is to provide an IIP apparatus capable of decreasing noise generated when the speed of the electronic-shutter mode is changed (i.e., increased or decreased).

According to one aspect of the invention, an IIP device is provided that includes photodetectors that store electrical charge when exposed to infrared light. The IIP device also includes transfer units, such as charge-coupled devices. During operation, a series of pseudo or dummy pulses are applied to the transfer units in a non-electronic-shutter mode. If the IIP device is switched to an electronic-shutter mode, discharge pulses are applied to the transfer units. The number of pseudo pulses is equal to the number of discharge pulses. Having the same number of pulses allows the temperature of the IIP device to remain substantially unchanged when switching between the non-electronic- and electronic-shutter modes.

According to another aspect of the invention, the waveforms (i.e., cycle and pulse number) of the pseudo pulses and the discharge pulses are substantially equal. This allows heat released by the pseudo pulses to be substantially equal to heat released by the discharge pulses. Since the amount of heat produced does not change, noise in the output caused by changes in temperature is substantially reduced or eliminated.

According to yet another aspect of the invention, the number of discharge pulses is set equal at all shutter speeds. This allows transitions from one shutter speed to another without changing the amount of heat released. Again, noise in the output is reduced because the temperature of the IIP device remains substantially constant.

### Brief Description of the Drawings

FIG. 1 is a perspective view of an infrared-image-pickup (IIP) device and driving means according to a first example embodiment of the invention.
FIG. 2 is a perspective view of an IIP device according to a second example embodiment of the invention.
FIG. 3 is a timing diagram of pseudo pulses and vertical-discharge pulses produced by the driving means of FIG. 1 during a feedback period.
FIG. 4 is a timing diagram of pseudo pulses and vertical-discharge pulses that have substantially the same waveform produced by the driving means of FIG. 2 during a feedback period.
FIG. 5 is a timing diagram of pseudo pulses and vertical-discharge pulses having the same timing and waveform according to a third example embodiment of the invention.
FIG. 6 is a cross-sectional view of the IIP device according to the invention having a temperature monitor coupled thereto.
FIG. 7 shows a prior-art IIP device.
FIG. 8 is a cross-sectional view of a prior-art cooling mechanism that houses the IIP device of FIG. 7.
FIG. 9 is a timing diagram showing vertical-feedback and vertical-scan periods according to the prior-art for controlling the IIP device of FIG. 7.
FIG. 10 is a detailed timing diagram of the vertical-feedback period of FIG. 9.

### Detailed Description of the Preferred Embodiments

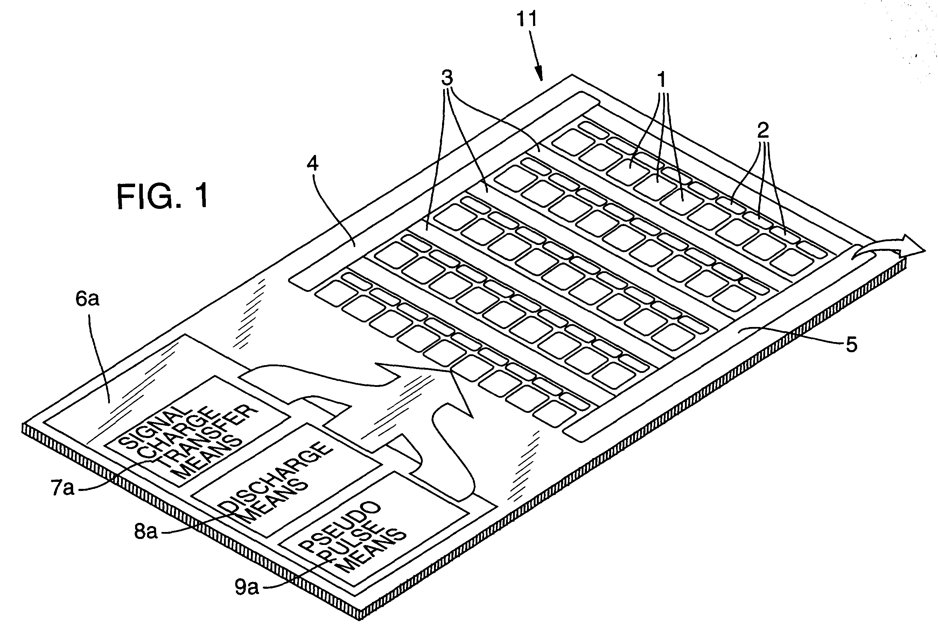

FIG. 1 shows an infrared-image-pickup (IIP) device 11 and driving means 6a associated with the IIP device according to a first embodiment of the invention. The structure of the IIP device 11 shares similarities to the structure of the conventional apparatus shown in FIGS. 7 and 8. For example, the IIP device 11 includes photodetectors 1, transfer gates 2, vertical CCDs 3 (also called vertical-transfer units), discharge sections 4, and a horizontal CCD (also called a horizontal-transfer unit) 5, all similar to those shown in FIG. 7. The operation of a drive circuit 23, however, differs in the first embodiment. Specifically, the period C2 in FIG. 9 is changed in the first embodiment in order to reduce heat and noise generated as a result of switching between a non-electronic-shutter mode and an electronic-shutter mode. The operation of the drive circuit 23 is represented in FIG. 1 as driving means 6a.

The driving means 6a includes a signal-charge-transfer means 7a, a discharge means 8a, and a pseudo pulse means 9a. The signal-charge-transfer means 7a applies pulses to the vertical-transfer units 3 during a vertical-scan period to read a desired image. The vertical-scan period is left unchanged from the conventional FIG. 9 embodiment. The discharge means 8a applies discharge pulses prior to the vertical-scan period and is used for discharging the photodetectors 1 to implement an electronic shutter. The pseudo pulse means 9a applies dummy or pseudo pulses during a non-electronic-shutter mode prior to the vertical-scan period. As further described below, the number of pulses applied by the discharge means 8a and the pseudo pulse means 9a is substantially equal. Since heat generated by the IIP device 11 is related to the number of pulses applied to the transfer units, the heat generated by the discharge means 8a is substantially equal to the heat generated by the pseudo pulse means 9a. As a result, the temperature of the IIP device remains substantially constant and noise is substantially reduced or eliminated.

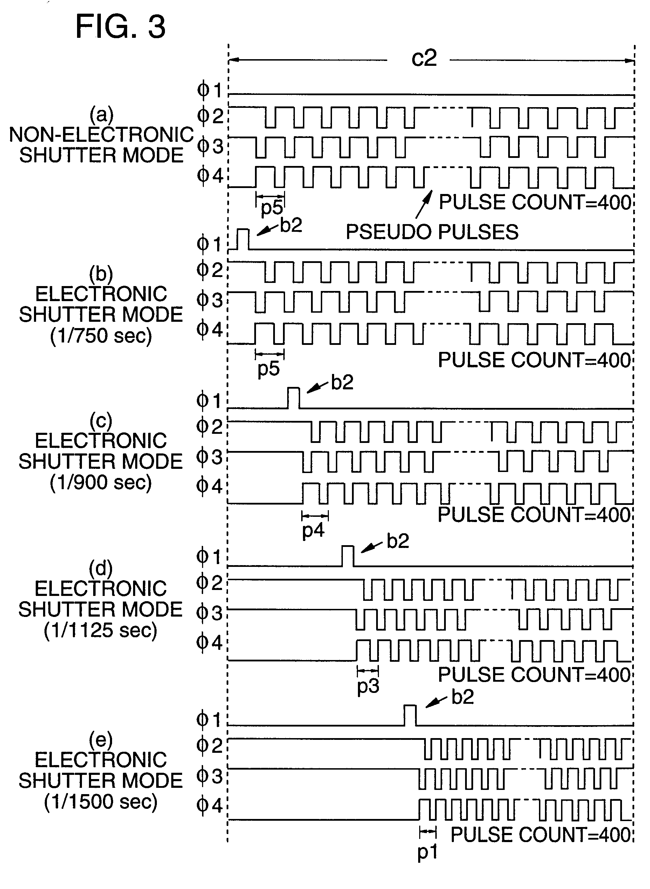

FIG. 3 shows a timing diagram for the discharge means 8a and the pseudo pulse means 9a of FIG. 1. FIG. 3(a) shows pseudo pulses in the period C2 applied to electrodes φ2 to φ4 by the pseudo pulse means when an electronic-shutter mode is not conducted. FIG. 3(a) shows that the number of pulses is set at 400. Notably, this is a much larger number of pseudo pulses than conventionally applied during a non-electronic-shutter mode (see FIG. 10(a)). These pseudo pulses are applied when the vertical-discharge pulses are not applied so that there is no possibility that the pseudo pulses impede the scan period.

If an electronic-shutter mode is conducted, unnecessary charges are discharged in accordance with the following procedures. The driving means 6a applies a gate pulse b2 at timing earlier than that of the gate pulse b1 (FIG. 9) by a desired exposure time. Following the gate pulse b2, the driving means 6a applies vertical-discharge pulses to the vertical-transfer electrodes φ2 to φ4. The number of the vertical-discharge pulses is set at a constant for any shutter speed. For example, the number of vertical-discharge pulses is set at 400 for all of the shutter speeds shown in FIGS. 3(b) through 3(e). The number of vertical-discharge pulses is also set equal to the number of pseudo pulses.

The pseudo pulses are used during the non-electronic-shutter mode to provide temperature compensation for the IIP device 11. Particularly, since the number of pseudo pulses is set equal to that of the vertical-discharge pulses, the temperature or calorific value during the electronic-shutter mode and that during the non-electronic-shutter mode are precisely equal to each other. The temperature of the IIP device 11 does not therefore suddenly increase when the non-electronic-shutter mode is switched to the electronic-shutter mode. As a result, it is possible to prevent temperature changes (i.e., increases or decreases) and output noise is substantially reduced or eliminated. Because the number of the vertical-discharge pulses is set equal at every shutter speed, it is possible to make the temperature substantially constant for all shutter speeds. This allows the shutter speed to be changed while maintaining a constant temperature, which also prevents noise. The pulse width and cycle of the waveforms at different shutter speeds is not necessarily the same, however. For example, the waveform of FIG. 3(b) differs from the waveform of FIG. 3(e) in terms of pulse width, cycle and timing.

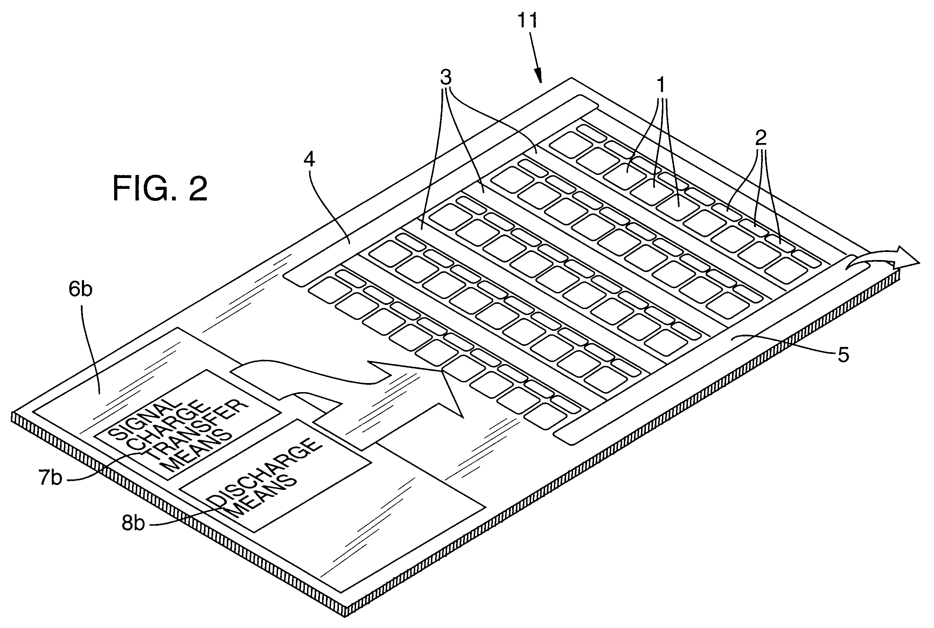

FIG. 2 shows an IIP device 11 according to a second embodiment of the invention with a driving means 6b used for switching between electronic-shutter speeds without generating heat and noise. The driving means includes a signal-charge-transfer means 7b similar to the signal-charge-transfer means 7a (FIG. 1) and a discharge means 8b. The discharge means 8b applies pulses such that the electronic-shutter speed may be switched without generating heat and noise. As further described below, one way to accomplish this is by providing a driving means 6b that supplies pulses having the same waveform (i.e., the same pulse number and cycle) regardless of the shutter speed.

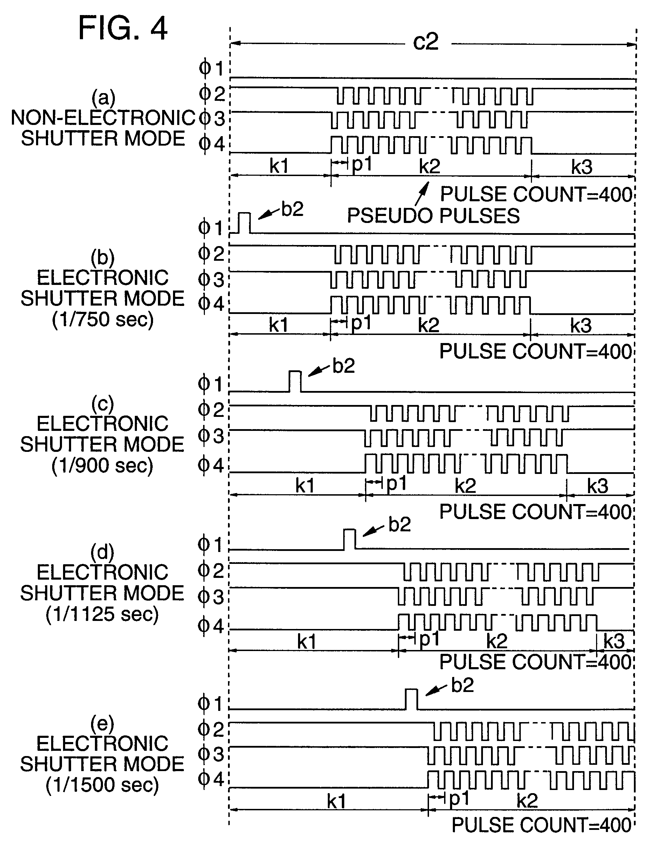

FIG. 4 is a timing diagram of pseudo pulses and vertical-discharge pulses for the driving means 6b of FIG. 2. The timing diagram of FIG. 4 differs from that of FIG. 3 in the following two ways: (1) the driving means 6b outputs vertical-discharge pulses having the same waveform (i.e., having the same pulse number and the same cycle) at any shutter speed in the electronic-shutter mode; and (2) the driving means 8b outputs pseudo pulses having the same waveform as that of the vertical-discharge pulses in a non-electronic-shutter mode. Having the same waveform for the vertical-discharge pulses and the pseudo pulses prevents a temperature change of the IIP device 11 when switched between the electronic- and non-electronic-shutter modes. Also, the pulse count is the same for all shutter speeds so that the electronic-shutter speed can be switched without a change in temperature. Consequently, noise in the output image signal is substantially reduced.

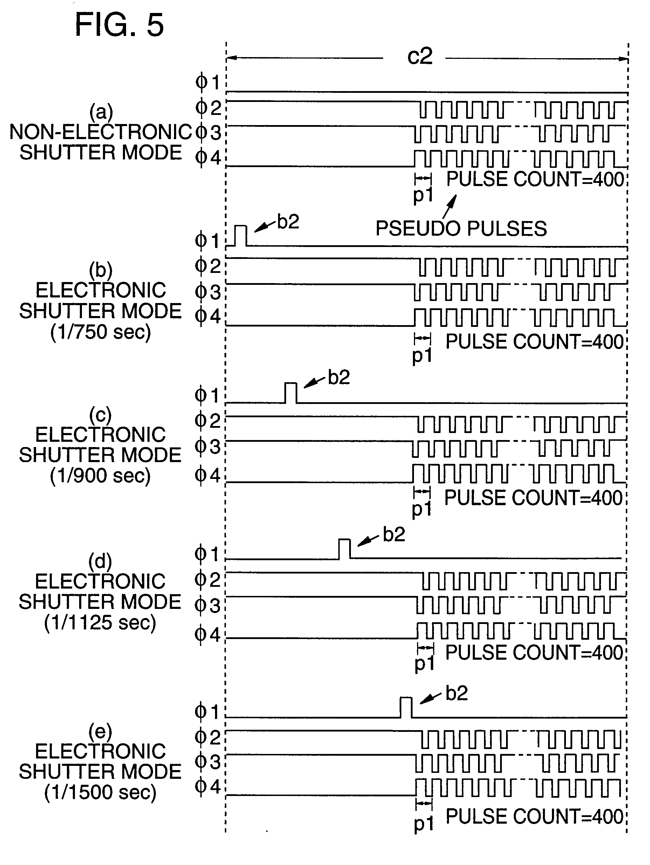

FIG. 5 is a timing diagram of pseudo pulses and vertical-discharge pulses according to a third embodiment of the present invention. In this embodiment, as in the case of the timing diagram of FIG. 4, the vertical-discharge pulses and the pseudo pulses have the same waveform. Furthermore, the vertical-discharge pulses and the pseudo pulses are applied on each electrode φ1 through φ4 at the same relative timing. That is, the pulses are applied to the electrodes φ1 to φ4 at the same time relative to the gate pulse b1 (FIG. 9). For example, the waveform applied to the electrode φ2 at a shutter speed of 1/750 sec. has the same waveform and timing as at a shutter speed of 1/900 sec. This allows the temperature change of the IIP device 11 caused by switching shutter speeds to be greatly reduced. Consequently, noise is prevented from entering an outputted image signal.

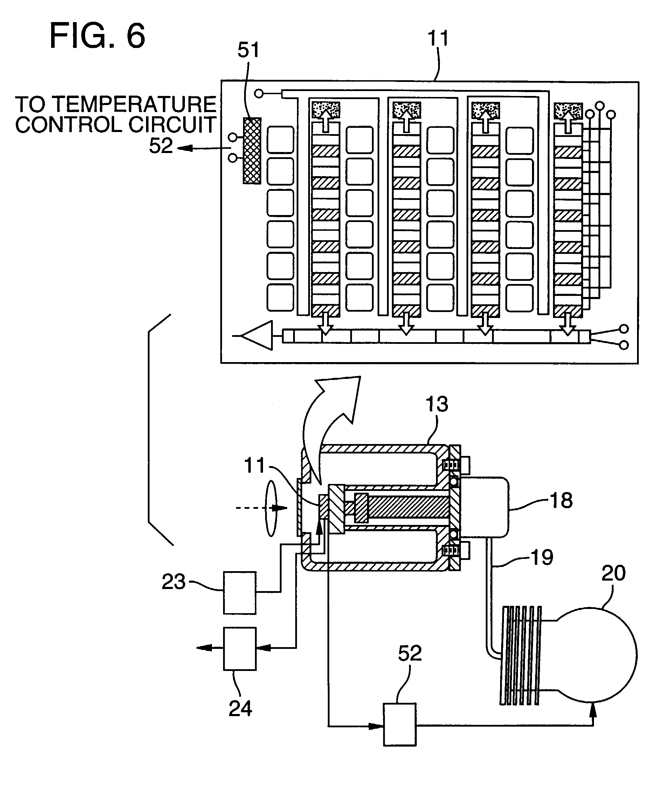

FIG. 6 shows a fourth embodiment of the present invention. A cooling mechanism is shown similar to that of FIG. 8. The cooling mechanism includes the vacuum container 13, the expansion unit 18, the coupler 19, the compressor 20, the drive circuit 23, and the image signal-processing circuit 24, all similar to those already described above. This embodiment differs in that a device-temperature-detection unit 51 is situated on the substrate of the IIP device 11. The temperature detection unit 51 is coupled to a temperature-control circuit 52. The temperature-detection unit 51 transmits signals to circuit 52 indicating the temperature of the IIP device 11. The temperature-control circuit 52 is coupled to the compressor 20. In response to receiving temperature-change signals from the temperature-detection unit 51, the temperature-control circuit 52 transmits signals to the compressor 20. The compressor 20 then modifies the temperature in the vacuum container 13 to ensure the desired temperature is maintained constant. The temperature-detection unit 51 and the temperature-control circuit 52 allow more accurate temperature control of the IIP device 11.

In the above-described embodiments, drive pulses of multiple phases are used as the pseudo pulses as shown in FIGS. 3 through 5. Consequently, as the pseudo pulses are applied, empty potential wells on the vertical CCDs 33 are vertically transferred so that excessive charges remaining in the vertical CCDs 33 are discharged. By applying pseudo pulses, therefore, it is possible to improve the signal-to-noise ratio of outputted image signals in the non-electronic-shutter mode. Of course, it is not necessary to make pseudo pulses out of the multiple-phase drive pulses since the pseudo pulses need to function only as temperature compensation.

Whereas the invention has been described in connection with multiple example embodiments, it will be understood that the invention is not limited to those embodiments. On the contrary, the invention is intended to encompass all alternatives, modifications, and equivalents as may be included within the scope of the invention as defined by the appended claims.

## Claims

1. A method of driving an infrared-image-pickup device, the method comprising the steps of:
(a) providing an infrared-image-pickup device comprising photodetectors for storing charge in response to receiving infrared light, transfer units for receiving charge from the photodetectors, and drain units for discharging the transfer units;
(b) entering a non-electronic-shutter mode wherein pseudo pulses are applied to the transfer units;
(c) switching to an electronic-shutter mode wherein discharge pulses are applied to the transfer units to move electrical charges stored on the transfer units to the drain units; and
(d) wherein a number of pseudo pulses applied during the non-electronic-shutter mode substantially equals a number of discharge pulses applied during the electronic-shutter mode.

2. The method of claim 1, wherein the infrared-image-pickup device further comprises a transfer gate for transferring the charge from the photodetectors to the transfer units.

3. The method of claim 2, further comprising applying a first gate pulse to the transfer gate at the start of the electronic-shutter mode, the first gate pulse being for moving the charge from the photodetectors to the transfer units.

4. The method of claim 3, further comprising applying a second gate pulse to the transfer gate prior to a start of a scan period, wherein charges are read from the photodetectors and transferred to a signal image-processing circuit.

5. The method of claim 4, wherein a length of time between the first and second gate pulses represents an electronic-shutter speed.

6. The method of claim 1, wherein the pseudo pulses have the same waveform as the discharge pulses.

7. The method of claim 1, wherein the number of discharge pulses is the same at different electronic-shutter speeds.

8. The method of claim 1, wherein the pseudo pulses have the same timing as the discharge pulses.

9. The method of claim 1, further comprising including a device temperature detection unit coupled to the infrared-image-pickup apparatus for detecting the temperature of the infrared-image-pickup device.

10. The method of claim 1, further comprising applying scan pulses to the transfer units after the discharge pulses are applied for moving charge from the photodetectors to an image signal-processing device.

11. The method of claim 1, wherein the transfer units are vertical-transfer units.

12. The method of claim 11, further comprising a horizontal-transfer unit coupled to the vertical-transfer units for receiving charge therefrom and outputting the charge to an image signal-processing circuit.

13. A method of operating an infrared-image-pickup apparatus, the method comprising the steps of:
(a) providing an infrared-image-pickup device including transfer units and photodetectors for storing charge in response to receiving infrared light;
(b) entering an electronic-shutter mode during a feedback period;
(c) applying discharge pulses to the transfer units at a first shutter speed;
(d) switching the first shutter speed to a second shutter speed; and
(e) maintaining the number of discharge pulses constant during the switching step.

14. The method of claim 13, further comprising switching to a third shutter speed while maintaining the number of discharge pulses constant.

15. The method of claim 13, further comprising maintaining the cycles of the discharge pulses constant at all shutter speeds.

16. An infrared-image-pickup device, comprising:
(a) a plurality of photodetectors;
(b) a transfer gate coupled to the photodetectors;
(c) a first transfer unit situated adjacent the photodetectors, the first transfer unit being for receiving charge from the photodetectors when the transfer gate is activated;
(d) a discharge unit coupled to the first set of transfer units for discharging charges stored on the transfer units;
(e) a second transfer unit coupled to the first transfer unit for receiving charges stored on the first transfer; and
(f) drive means for controlling the transfer gate and the first transfer unit in a non-electronic-shutter mode and an electronic-shutter mode, wherein pseudo pulses are applied to the first transfer unit in the non-electronic-shutter mode and discharge pulses are applied to the first transfer unit in an electronic-shutter mode, wherein the number of pseudo pulses substantially equals the number of discharge pulses.

17. The infrared-image-pickup device of claim 16, wherein a cycle of the pseudo pulses is equal to a cycle of the discharge pulses.

18. The infrared-image-pickup device of claim 16, wherein the number of discharge pulses is constant at all shutter speeds.

19. The infrared-image-pickup device of claim 16, wherein the cycles of the discharge pulses is constant at all shutter speeds.

20. An infrared-image-pickup system, comprising:
(a) a vacuum container having a chamber located therein;
(b) a cold stage mounted within the chamber of the vacuum container;
(e) an infrared-image-pickup device mounted to the cold stage, the infrared-image-pickup device including a plurality of photodetectors for storing charge in response to receiving infrared light;
(d) a temperature-detection unit mounted to the infrared-image-pickup device;
(e) a compressor coupled to the vacuum container for maintaining the infrared-image-pickup device at a desired temperature; and
(f) a temperature-control circuit coupled between the temperature-detection unit and the compressor, the temperature-control circuit being for controlling the compressor in response to signals received from the temperature detection unit.
